(19) **Europäisches Patentamt**
**European Patent Office**
**Office européen des brevets**

(11) **EP 3 689 990 A1**

(12) **EUROPEAN PATENT APPLICATION**
published in accordance with Art. 153(4) EPC

(43) Date of publication:
**05.08.2020 Bulletin 2020/32**

(21) Application number: **18860001.9**

(22) Date of filing: **27.09.2018**

(51) Int Cl.:
*C09J 7/00* (2018.01)    *C09J 201/00* (2006.01)

(86) International application number:
**PCT/JP2018/036038**

(87) International publication number:
**WO 2019/065875 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2017 JP 2017192137**

(71) Applicant: **Nitto Denko Corporation**
**Ibaraki-shi, Osaka 567-8680 (JP)**

(72) Inventors:
• **TAKASHIMA, Atsushi**
**Ibaraki-shi**
**Osaka 567-8680 (JP)**
• **MAKIHATA, Yosuke**
**Ibaraki-shi**
**Osaka 567-8680 (JP)**

(74) Representative: **Gill Jennings & Every LLP**
**The Broadgate Tower**
**20 Primrose Street**
**London EC2A 2ES (GB)**

(54) **ADHESIVE ARTICLE**

(57) The present invention relates to an adhesive article including an adhesive layer and a non-adhesive layer provided on at least one surface of the adhesive layer. The adhesive article expresses adhesiveness when the non-adhesive layer is broken by stretching, and when the adhesive article has been stretched to twice in a lengthwise direction, the number of fragments per unit area of the non-adhesive layer is 10/cm$^2$ or more at the central part of the surface of the adhesive article after stretching to twice where the non-adhesive layer has been provided.

**Description**

TECHNICAL FIELD

The present invention relates to an adhesive article and in more detail, to an adhesive article that expresses adhesiveness by stretching.

BACKGROUND ART

Adhesive sheets and adhesive tapes are used in, for example, adhesion of various adherends such as a metal, a glass, a wood, a paper, a corrugated cardboard and a plastic material. Such adhesive sheets are that its adhesive surface is generally protected with a separator (release sheet) in order to protect the adhesive surface until sticking on an adherend. Furthermore, in the case of a rolled form such as a rolled adhesive tape, a substrate in which a back surface contacting an adhesive surface was subjected to a release treatment is used in order to facilitate rewinding.

However, in an adhesive sheet using a separator, the separator to be peeled when using is disposed after peeling. For this reason, the use of a separator is undesirable from the standpoints of resource saving and cost reduction. Furthermore, in case where a user uses an adhesive sheet or an adhesive tape while wearing globes or in case where an adhesive sheet or adhesive tape to be used has a small size, there is a problem that workability when peeling a separator from an adhesive sheet or when rewinding an adhesive tape is poor. Therefore, it is considered to be useful if an adhesive sheet or adhesive tape that does not require a separator and a release treatment of a back surface of a substrate can be provided.

In connection with this, Patent Literature 1 describes an adhesiveness reexpression method including fixing a non-adhesive substance to an adhesive surface of an adhesive sheet by an interfacial catalytic reaction to form a non-adhesive thin layer and breaking the non-adhesive thin layer when sticking on an adherend, thereby reexpressing the adhesiveness.

CITATION LIST

PATENT LITERATURE

Patent Literature 1: Japanese Patent No. 4380837

SUMMARY OF INVENTION

TECHNICAL PROBLEM

However, according to the findings of the present inventors, the adhesive sheet by the adhesiveness reexpression method described in Patent Literature 1 did not necessarily express sufficient adhesiveness.

In view of the above problems, the present invention has an object to provide an adhesive article capable of expressing satisfactory adhesiveness by simple operation when used while substantially having non-adhesiveness in the initial state.

SOLUTION TO PROBLEM

One embodiment of the present invention relates to an adhesive article including an adhesive layer and a non-adhesive layer provided on at least one surface of the adhesive layer, wherein the adhesive article expresses adhesiveness when the non-adhesive layer is broken by stretching, and wherein when the adhesive article has been stretched to twice in a lengthwise direction, the number of fragments per unit area of the non-adhesive layer is $10/cm^2$ or more at the central part of the surface of the adhesive article after stretching to twice where the non-adhesive layer has been provided.

In one embodiment of the present invention, the adhesive article may further includes a substrate, and the adhesive layer and the non-adhesive layer may be provided in this order on the substrate.

In one embodiment of the present invention, the non-adhesive layer preferably contains a polymer material.

In one embodiment of the present invention, the non-adhesive layer preferably contains an aggregate of a plurality of emulsion particles.

In one embodiment of the present invention, the adhesive article is preferably such that a tack value of the adhesive article after stretching to twice in a lengthwise direction measured by the following probe tack test 2 is at least 10 gf larger than a tack value before stretching measured by the following probe tack test 1.

(Probe tack test 1)

After a stainless steel probe (SUS304) having a diameter of 5 mm has been brought into contact with the surface of the adhesive article with a contact load of 500 gf under an environment of measurement temperature of 23°C, a load applied to the probe when separating 1 mm in a rate of 30 mm/min is measured with time, and a maximum load required when peeling is obtained.

(Probe tack test 2)

After the adhesive article has been stretched in a lengthwise direction and then a stainless steel probe (SUS304) having a diameter of 5 mm has been brought into contact with the surface of the adhesive article with a contact load of 500 gf under an environment of measurement temperature of 23°C, a load applied to the probe when separating 1 mm in a rate of 30 mm/min is measured with time, and a maximum load required when peeling is obtained.

Moreover, one embodiment of the present invention relates to an adhesive article including an adhesive layer and a non-adhesive layer provided on at least one surface of the adhesive layer, wherein the adhesive article expresses adhesiveness when the non-adhesive layer is broken by stretching, and wherein the non-adhesive layer contains an aggregate of a plurality of emulsion particles.

ADVANTAGEOUS EFFECTS OF INVENTION

The adhesive article according to one embodiment of the present invention is substantially non-adhesive in the initial state and therefore does not require a separator and a release treatment. Additionally, the adhesive article can express good adhesiveness by simple operation.

BRIEF DESCRIPTION OF DRAWINGS

Fig. 1 is a schematic cross-sectional view of one configuration example of an adhesive article.
Fig. 2 is a schematic cross-sectional view of one configuration example of an adhesive article.
Fig. 3 is a plane view of an adhesive article before stretching for explaining a calculation method of the number of fragments of a non-adhesive layer after stretching to twice.
Fig.4 is a plane view of an adhesive article after stretching to twice for explaining a calculation method of the number of fragments of a non-adhesive layer after stretching to twice.
Fig. 5 is a schematic cross-sectional view of one configuration example of an adhesive article.
Fig. 6 is a schematic cross-sectional view of one configuration example of an adhesive article.

DESCRIPTION OF EMBODIMENTS

The embodiments of the present invention are described in detail below.

In the following drawings, members and portions having the same action are sometimes explained by allotting the reference signs to those, and the duplicating descriptions are sometimes omitted or simplified. Furthermore, the embodiments shown in the drawings are schematically shown in order to clearly describe the present invention, and a size and a scale of the actual product are not always correctly shown.

Furthermore, in the present description, the proportion (percentage, parts and the like) based on mass is the same as the proportion (percentage, parts and the like) based on weight.

The adhesive article according to one embodiment of the present invention is an adhesive article including an adhesive layer and a non-adhesive layer provided on at least one surface of the adhesive layer, and the adhesive article expresses adhesiveness when the non-adhesive layer is broken by stretching.

The adhesive article of this embodiment is an adhesive article that expresses adhesiveness by stretching, and the adhesive article does not substantially have adhesiveness in the initial state before stretching, that is, is substantially non-adhesive. Adhesiveness due to the adhesive layer is expressed when the non-adhesive layer is broken by stretching. Specifically, the non-adhesive layer is broken in the course of stretching, and fragments of the non-adhesive layer broken by stretching typically adheres to the surface of the adhesive article (adhesive layer). On the other hand, surface area of the adhesive article is increased by the stretching of the adhesive article. As a result, in the adhesive article after stretching, the adhesive layer is exposed at the surface to which the fragments of the non-adhesive layer are not adhered, and adhesiveness due to the adhesive layer is thus expressed.

The adhesive article of this embodiment can have various shapes such as a sheet shape, a line shape, a mass shape, a bag shape, a tube shape, a honeycomb shape and a mesh shape. The adhesive article of this embodiment may be a substrateless adhesive article, but may be further provided with a substrate having properties according to the form of the adhesive article.

A sheet-shaped adhesive article (hereinafter referred to as an "adhesive sheet") as an example is described below. The term "sheet-shaped" used herein is a concept including shapes such as a tape shape, a film shape, a label shape and a roll shape, in addition to a sheet shape.

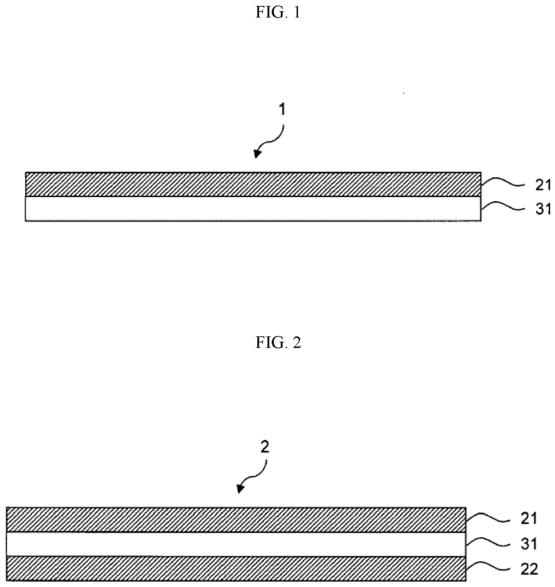

Fig. 1 shows a schematic cross-sectional view of one configuration example of the adhesive article according to this embodiment. An adhesive article 1 shown in Fig. 1 includes an adhesive layer 31 and a non-adhesive layer 21 provided on one surface of the adhesive layer. Fig. 2 shows a schematic cross-sectional view of another configuration example of the adhesive article according to this embodiment. An adhesive article 2 shown in Fig. 2 includes an adhesive layer 31, a non-adhesive layer 21 provided on one surface of the adhesive layer 31 and a non-adhesive layer 22 provided on the surface opposite the non-adhesive layer 21 side.

In the adhesive article of this embodiment, the non-adhesive layer covers the adhesive layer in the initial state before stretching, but the adhesive article expresses adhesiveness when the non-adhesive layer is broken by stretching the adhesive article.

In order that the non-adhesive layer appropriately has substantial non-adhesiveness, storage modulus at 23°C of the non-adhesive layer is preferably $1 \times 10^7$ Pa or more and more preferably $5 \times 10^7$ Pa or more. On the other hand, the storage modulus at 23°C of the non-adhesive layer is, for example, preferably $1 \times 10^{10}$ Pa or less and more preferably $5 \times 10^9$ Pa or less, from the standpoint of flexibility. The storage modulus at 23°C of the non-adhesive layer is measured by a dynamic viscoelasticity measuring device (product name: RSA-III, manufactured by TA Instruments) and in detail, is measured by the measurement method described in the column of examples.

In the adhesive article of this embodiment, streaks (cuts) may be formed on the non-adhesive layer in order to assist break of the non-adhesive layer when stretching. The direction of streaks in case of forming streaks on the non-adhesive layer is not particularly limited, but the break by stretching of the non-adhesive layer sometimes relatively easily occurs in the direction vertical to the stretching direction. In such a case, streaks are preferably formed in the stretching direction in order to finely break the non-adhesive layer by stretching. The direction forming streaks is not limited to one direction, and streaks may be formed in a plurality of arbitrary directions, for example, two directions of a stretching direction and a direction vertical to the stretching direction. By forming streaks (cuts) on the non-adhesive layer, the non-adhesive layer can be broken into finer fragments by stretching.

The material of the non-adhesive layer that can be used can be appropriately selected from materials that do not substantially have adhesiveness in themselves, can cover the adhesive layer and can be broken by stretching, and examples thereof include polymer materials, metal materials and inorganic materials. Above all, polymer materials are preferably used from the standpoint of easy break by stretching. The polymer materials include a resin (polyolefin, polyester, polystyrene, acryl resin, vinyl chloride, phenol resin, polyurethane, nylon or the like), an elastomer, a rubber, a natural polymer (fiber cellulose, protein or the like), and starch. Above all, acryl resin is preferred because self-fusion is difficult to occur (difficult to cause blocking). One kind alone of those materials can be used or they can be used by combining two or more kinds.

The case where the non-adhesive layer contains a resin is described below. When the non-adhesive layer contains a resin, a composition containing a polymer used to form the non-adhesive layer (hereinafter referred to as a "non-adhesive layer forming polymer-containing composition") may be a water-dispersion type non-adhesive layer forming polymer-containing composition or may be a solvent type non-adhesive layer forming polymer-containing composition.

In the present description, the non-adhesive layer formed by a water dispersion type non-adhesive layer forming polymer-containing composition is sometimes called an emulsion type non-adhesive layer, and the non-adhesive layer formed by a solvent type non-adhesive layer forming polymer-containing composition is sometimes called a solvent type non-adhesive layer. Furthermore, the term "polymer" has the concept including a copolymer.

The non-adhesive layer formed by a water dispersion type non-adhesive layer forming polymer-containing composition is formed as a layer containing an aggregate of a plurality of emulsion particles. The non-adhesive layer is preferably a layer containing an aggregate of a plurality of emulsion particles (emulsion polymer particles) (emulsion type non-adhesive layer) for the reason that better adhesiveness is expressed after stretching.

In the case where the non-adhesive layer is a layer containing an aggregate of a plurality of emulsion particles (emulsion polymer particles) (emulsion type non-adhesive layer), the reason that better adhesiveness is expressed after stretching is not always obvious, but is inferred as follows. In the case where the non-adhesive layer is an emulsion type non-adhesive layer, when the adhesive article is stretched, the non-adhesive layer is broken in various directions from the interface between agglomerated emulsion particles, and fine scaly fragments are formed, thereby typically forming the state that the fragments are adhered to the surface of the adhesive article (adhesive layer). On the other hand, surface area of the adhesive article increases by the stretching of the adhesive article. As a result, the surface to which the fragments of the non-adhesive layer are not adhered comes into the state that the adhesive layer is exposed, and adhesiveness due to the adhesive layer is thus expressed. Additionally, when the adhesive article is stuck on an adherend in the state that the non-adhesive layer in the form of fine scaly fragments is adhered on the surface of the adhesive layer, scaly fragments of the non-adhesive layer get into the adhesive layer by the pressure when sticking, and the exposed surface of the adhesive layer increases. It is considered from this fact that adhesiveness due to the adhesive layer is better expressed.

A case where the non-adhesive layer contains an aggregate of a plurality of emulsion particles containing acrylic polymer (acrylic polymer emulsion particles) is described below, but the present invention is not limited to this.

The non-adhesive layer containing an aggregate of a plurality of acrylic polymer emulsion particles can be formed using a composition containing a water dispersion type acrylic polymer as the non-adhesive layer forming polymer-containing composition. The water dispersion type acrylic polymer is a composition in an emulsion form in which the acrylic polymer is dispersed in water. The acrylic polymer preferably includes an acrylic copolymer wherein a main monomer unit is methyl methacrylate, n-butyl methacrylate, i-butyl methacrylate, t-butyl methacrylate, isobornyl (meth)acrylate, cyclohexyl acrylate or the like. Above all, an acrylic copolymer (1) in which a main monomer unit is n-butyl methacrylate is preferred, and specifically includes an acrylic copolymer (1-1) containing n-butyl methacrylate and a carboxyl group-containing monomer as monomer units, and an acrylic copolymer (1-2) containing n-butyl methacrylate, a carboxyl group-containing monomer, and (meth)acrylic acid $C_{1-14}$ alkyl ester other than n-butyl methacrylate, as monomer units.

The carboxyl group-containing monomer is not particularly limited, and can includes, for example, (meth)acrylic acid, carboxyethyl (meth)acrylate, carboxypentyl (meth)acrylate, itaconic acid, maleic acid, fumaric acid and crotonic acid. Above all, acrylic acid and/or methacrylic acid are preferred, and concurrent use of acrylic acid and methacrylic acid is more preferred. In the case of concurrently using acrylic acid and methacrylic acid, a ratio of amounts thereof is not particularly limited, but those are preferably used in nearly the same amounts. One kind or two or more kinds of the carboxyl group-containing monomer can be used.

In (meth)acrylic acid $C_{1-14}$ alkyl ester other than n-butyl methacrylate, an alkyl group having 1 to 14 carbon atoms may be straight chain and may be branched chain, and examples thereof include methyl (meth)acrylate, ethyl (meth)acrylate, propyl (meth)acrylate, isopropyl (meth)acrylate, n-butyl acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, cyclohexyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate and tetradecyl (meth)acrylate. The (meth)acrylic acid $C_{1-14}$ alkyl ester is preferably acrylic acid $C_{2-12}$ alkyl ester and more preferably acrylic acid $C_{4-8}$ alkyl ester.

The acrylic copolymer (1) contains n-butyl methacrylate in an amount of preferably 50 to 99% by weight, more preferably 60 to 90% by weight and particularly preferably 60 to 70% by weight, in the whole monomer units.

The composition of the acrylic copolymer (1-1) containing n-butyl methacrylate and a carboxyl group-containing monomer as monomer units is that n-butyl methacrylate : carboxyl group-containing monomer (weight ratio) is preferably 80 to 99 : 20 to 1, more preferably 80 to 95 : 20 to 5 and particularly preferably 85 to 95 : 15 to 5. The composition of the acrylic copolymer (1-2) containing n-butyl methacrylate, a carboxyl group-containing monomer and (meth)acrylic acid $C_{1-14}$ alkyl ester other than n-butyl methacrylate, as monomer units is that n-butyl methacrylate : carboxyl group-containing monomer : (meth)acrylic acid $C_{1-14}$ alkyl ester other than n-butyl methacrylate (weight ratio) is preferably 50 to 98 : 1 to 20 : 1 to 30 (provided that the total weight of three components is 100) and more preferably 60 to 90 : 5 to 20 : 5 to 20 (provided that the total weight of three components is 100).

The acrylic copolymers (1) and (1-1) each can contain methacrylic acid $C_{1-18}$ alkyl ester other than n-butyl methacrylate, and a hydroxyl group-containing monomer as monomer units in a range of 10% by weight or less in the whole monomer units. The acrylic copolymer (1-2) can contain methacrylic acid $C_{15-18}$ alkyl ester and a hydroxyl group-containing monomer as monomer units in a range of 10% by weight or less in the whole monomer units.

The hydroxyl group-containing monomer includes hydroxyethyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate and (4-hydroxymethylcyclohexyl) methyl methacrylate.

The glass transition temperature of the acrylic polymer forming the non-adhesive layer containing an aggregate of a plurality of acrylic polymer emulsion particles is not particularly limited, but is preferably 5°C or higher and more preferably 10°C or higher, in order to show good non-adhesiveness. The upper limit of the glass transition temperature is not particularly limited, but is, for example, 150°C or lower from the standpoint of film formability.

In the present description, the glass transition temperature (°C) of the acrylic polymer is obtained by converting a theoretical glass transition temperature (K) calculated from the following Fox equation from monomer units constituting the acrylic polymer and the respective proportions into degree Celsius (°C).

Fox equation:

$$1/Tg = W_1/Tg_1 + W_2/Tg_2 + \cdots + W_n/Tg_n$$

Tg: glass transition temperature (K) of polymer
$Tg_1$, $Tg_2$, $\cdots$ $Tg_n$ : glass transition temperature (K) of homopolymer of each monomer
$W_1$, $W_2$, $\cdots$ $W_n$ : weight fraction of each monomer

Theoretical glass transition temperature obtained from Fox equation (converted into degree Celsius (°C)) well consists with the measured glass transition temperature obtained by differential scanning calorimetry (DSC), dynamic viscoelasticity or the like.

As a method for obtaining a water dispersion type acrylic polymer by polymerizing the monomer, conventional polymerization methods can be used, and an emulsion polymerization method can be preferably used. As a monomer supply method in conducting the emulsion polymerization, a batch preparation method that supplies all monomer components at one time, a continuous supply (dropping) method, a split supply (dropping) method or the like can be appropriately used. A part or the whole (typically the whole) of monomers may be previously mixed with water (typically, an appropriate amount of an emulsifier is used together with water) and emulsified, and the resulting emulsion (monomer emulsion) may be supplied to a reaction vessel at one time, continuously or dividedly. The polymerization temperature can be appropriately selected depending on the kind of monomers used, the kind of a polymerization initiator, and the like, and can be, for example, about 20 to 100°C (typically 40 to 80°C).

The polymerization initiator used in polymerization can be appropriately selected from the conventional polymerization initiators depending on the kind of a polymerization method. For example, in an emulsion polymerization, an azo type polymerization initiator can be preferably used. Specific examples of the azo type polymerization initiator include 2,2'-azobisisoburyronitrile, 2,2'-azobis(2-methylpropionamidine)disulfate, 2,2'-azobis(2-amidinopropane)dihydrochloride, 2,2'-azobis[(2-(5-methyl-2-imidazolin-2-yl)propane]-dihydrochloride, 2,2'-azobis[2-(5-methyl-2-imidazolin-2-yl)propane]dihydrochloride, 2,2'-azobis(N,N'-dimethyleneisobutylamidine), 2,2'-azobis[N-(2-carboxyethyl)-2-methylpropionamidine]hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane) and dimethyl-2,2'-azobis(2-methylpropionate).

Other examples of the polymerization initiator include a sulfate such as potassium persulfate or ammonium persulfate; a peroxide type initiator such as benzoyl peroxide, t-butyl hydroperoxide, di-t-butyl peroxide, t-butyl peroxybenzoate, dicumyl peroxide, 1,1-bis(t-butylperoxy)-3,3,5-trimethyl cyclohexane, 1,1-bis(t-butylperoxy)cyclododecane or hydrogen peroxide; a substituted ethane type initiator such as phenyl-substituted ethane; and an aromatic carbonyl compound. Further example of the polymerization initiator includes a redox type initiator by a combination of a peroxide and a reducing agent. Examples of the redox type initiator include a combination of a peroxide and ascorbic acid (such as a combination of a hydrogen peroxide solution and ascorbic acid), a combination of a peroxide and iron (II) salt (such as a combination of a hydrogen peroxide solution and iron (II) salt), and a combination of a persulfate and sodium hydrogen sulfite.

Those polymerization initiators can be used alone or by combining two or more kinds. The amount of the polymerization initiator used is the amount generally used, and can be selected from a range of, for example, about 0.005 to 1 part by weight (typically 0.01 to 1 part by weight) per 100 parts by weight of the total monomer components.

In the preparation of the water dispersion type acrylic polymer, an emulsifier can be used as necessary. Anionic, nonionic and cationic emulsifiers can be used as the emulsifier. In general, anionic or nonionic emulsifier is preferably used. The emulsifier can be preferably used when monomer components are emulsified or when an acrylic polymer obtained by other method is dispersed in water.

The anionic emulsifier includes an alkyl sulfate type anionic emulsifier such as sodium lauryl sulfate, ammonium lauryl sulfate or potassium lauryl sulfate; a polyoxyethylene alkyl ether sulfate type anionic emulsifier such as polyoxyethylene lauryl ether sodium sulfate; a polyoxyethylene alkyl phenyl ether sulfate type anionic emulsifier such as ammonium polyoxyethylene lauryl phenyl ether sulfate or sodium polyoxyethylene lauryl phenyl ether sulfate; a sulfonate type anionic emulsifier such as sodium dodecylbenzene sulfate; and a sulfosuccinic acid type anionic emulsifier such as disodium lauryl sulfosuccinate or disodium lauryl polyoxyethylene sulfosuccinate.

The nonionic emulsifier includes a polyoxyethylene alkyl ether type nonionic emulsifier such as polyoxyethylene lauryl ether; a polyoxyethylene alkyl phenyl ether type emulsifier such as polyoxyethylene lauryl phenyl ether; polyoxyethylene fatty acid ester; and a polyoxyethylene polyoxypropylene block polymer. A radical polymerizable emulsifier (reactive emulsifier) having a structure that a radial polymerizable group (such as a propenyl group) is introduced into the above-described anionic or nonionic emulsifiers may be used.

One kind alone of those emulsifiers may be used or they may be used by combining two kinds or more. The amount of the emulsifier used is an amount capable of preparing an acrylic polymer in a form of an emulsion, and is not particularly limited. For example, the amount is appropriately selected from a range of about 0.2 to 10 parts by weight (preferably about 0.5 to 5 parts by weight) on solids basis per 100 parts by weight of the acrylic polymer. When the amount of the emulsifier used is too small, desired dispersion stability (polymerization stability, mechanical stability and the like) may be difficult to obtain. When the amount of the emulsifier used is too large, adhesiveness may be deteriorated or an adherend may be contaminated.

The above description is mainly described in the case that the non-adhesive layer contains an aggregate of a plurality of emulsion particles (acrylic polymer emulsion particles) containing an acrylic polymer, but the present invention is not limited to this case, and for example, the case that the non-adhesive layer contains an aggregate of emulsion particles containing a polymer other than the acrylic polymer can appropriately follow the above case.

In the case where a solvent type composition is used as the non-adhesive layer forming polymer-containing composition for forming the non-adhesive layer, a solution obtained by dissolving the polymer that forms the non-adhesive layer in an appropriate solvent such as ethyl acetate or ethanol can be used.

The non-adhesive layer forming polymer-containing composition may contain an acid or a base (ammonia water or the like) used for pH adjustment or the like, as necessary. The composition may further contain various additives such as a crosslinking agent, a viscosity regulator (such as a thickener), a leveling agent, a release modifier, a plasticizer, a softener, a filler, a coloring agent (pigment, dye or the like), a surfactant, an antistatic agent, a preservative, an age resister, an ultraviolet absorber, an antioxidant and a light stabilizer. However, a crosslinking agent is not preferably contained in the non-adhesive layer forming polymer-containing composition for the reason that the non-adhesive layer becomes too hard, so that the non-adhesive layer may be difficult to break and the adhesive layer may be broken by the impact at break of the non-adhesive layer.

The thickness of the non-adhesive layer is, for example, preferably 0.1 $\mu$m or more and more preferably 1 $\mu$m or more, form the standpoints of securing of substantial non-adhesiveness before stretching and protection of the adhesive layer. On the other hand, the thickness is, for example, preferably 60 $\mu$m or less and more preferably 20 $\mu$m or less, from the standpoint of expression of adhesive force.

In the adhesive article of this embodiment, the adhesive constituting the adhesive layer is not particularly limited and can be conventional adhesives. The adhesive may be an acrylic adhesive, a rubber adhesive, a vinyl alkyl ether adhesive, a silicone adhesive, a polyester adhesive, a polyamide adhesive, a urethane adhesive, a fluorine adhesive and an epoxy adhesive. Above all, a rubber adhesive and an acrylic adhesive are preferred from the standpoint of adhesiveness, and an acrylic adhesive is particularly preferred. One kind alone of the adhesive may be used and it may be used by combining two or more kinds. The adhesive in this embodiment is preferably a pressure-sensitive adhesive that has adhesiveness at normal temperatures and can attach an adherend to the surface thereof by a pressure caused on contact between the surface of the adhesive and the surface of the adherend. The pressure-sensitive adhesive does not require heating and therefore can be applied to an adherend that is weak to heat.

The acrylic adhesive contains, as a main ingredient, a polymer of monomers including (meth)acrylic acid alkyl ester such as ethyl acrylate, butyl acrylate, 2-ethylhexyl acrylate, isooctyl acrylate or isononyl acrylate as a main component, and a modifying monomer such as acrylonitrile, vinyl acetate, styrene, methyl methacrylate, acrylic acid, maleic anhydride, vinylpyrrolidone, glycidyl methacrylate, dimethyl aminoethyl methacrylate, hydroxy ethyl acrylate or acrylamide, added to the main ingredient as necessary.

The rubber adhesive contains a rubber polymer such as natural rubber, a styreneisoprene-styrene block copolymer, a styrene-butadiene-styrene block copolymer, a styrene-ethylene-butylene-styrene copolymer, a styrene-butadiene rubber, polybutadiene, polyisoprene, polyisobutylene, butyl rubber, chloroprene rubber or silicone rubber, as a main ingredient.

Tackifying resins such as rosin type, terpene type, styrene type, aliphatic petroleum type, aromatic petroleum type, xylene type, phenol type, coumarone indene type and their hydrogenated products, and various additives such as a crosslinking agent, a viscosity regulator (such as a thickener), a leveling agent, a release modifier, a plasticizer, a softener, a filler, a coloring agent (pigment, dye or the like), a surfactant, an antistatic agent, a preservative, an age resister, an ultraviolet absorber, an antioxidant and a light stabilizer can be appropriately added to those adhesives.

Any type of a solvent type adhesive and a water dispersion type adhesive can be used as the adhesive. A water dispersion type adhesive is preferred in that high-speed coating is possible, it is environmentally friendly, and influence (swelling and dissolution) on the core material by a solvent is small.

The thickness of the adhesive layer is not particularly limited, but when the thickness is too small, the adhesive article may be broken when stretching. Therefore, the thickness is, for example, preferably 1 $\mu$m or more and more preferably 3 $\mu$m or more. On the other hand, when the thickness is too large, large stress may be required when stretching. Therefore, the thickness is, for example, preferably 200 $\mu$m or less and more preferably 150 $\mu$ or less.

According to the adhesive article of this embodiment, when the adhesive article has been stretched to twice in a lengthwise direction, the number of fragments per unit area of the non-adhesive layer (hereinafter referred to as the number of fragments of the non-adhesive layer after stretching to twice) is preferably 10/cm$^2$ or more, more preferably 25/cm$^2$ or more, still more preferably 50/cm$^2$ or more and yet further preferably 100/cm$^2$ or more, at the central part of the surface of the adhesive article after stretching to twice where the non-adhesive layer has been provided. When the number of fragments of the non-adhesive layer after stretching to twice is 10/cm$^2$ or more, adhesiveness expressed after stretching of the adhesive article is better. The reason for this is considered as follows. When the number of fragments is 10/cm$^2$ or more, the individual fragment of the non-adhesive layer adhered to the surface of the adhesive layer becomes sufficiently fine. On the other hand, the surface area of the adhesive article is increased by the stretching of the adhesive article. Therefore, in the adhesive article after stretching, the surface to which the fragments of the non-adhesive layer are not adhered comes into an exposed state and adhesiveness due to the adhesive layer is thus expressed. In addition, when the adhesive article is stuck on an adherend in the state that the non-adhesive layer in the form of fine fragments has been adhered to the surface of the adhesive layer, fine fragments of the non-adhesive layer get into the adhesive layer by a pressure when sticking and the exposed area of the adhesive layer is increased. It is therefore considered that adhesiveness due to the adhesive layer is better expressed. The upper limit of the number of fragments of the non-adhesive layer after stretching to twice is not particularly limited, but is, for example, 500/cm$^2$ or less.

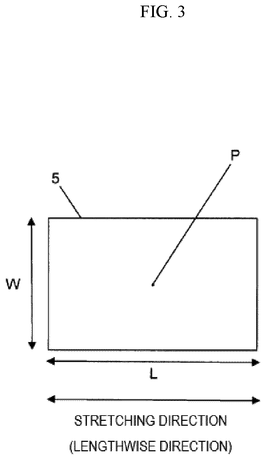

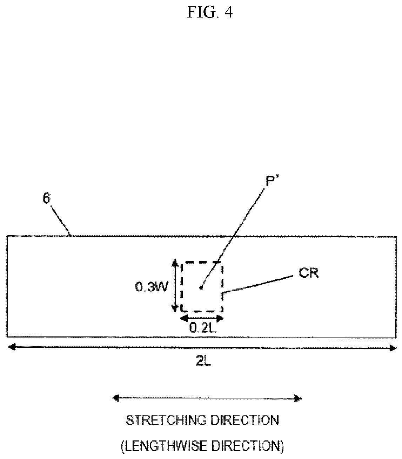

The calculation method of the number of fragments of the non-adhesive layer after stretching to twice in the adhesive article having a rectangular surface shape is described below by reference to Figs. 3 and 4.

Adhesive article 5 having length: L and width: W with a center P as a center is prepared as shown in Fig. 3. Stretching direction (lengthwise direction) is defined as "Horizontal" and a direction vertical to the stretching direction (lengthwise direction) is defined as "Vertical". The adhesive article 5 is stretched to twice in the lengthwise direction to prepare an adhesive article 6 after stretching to twice as shown in Fig. 4. In this case, the central part (region surrounded by dot line in Fig. 4) in the adhesive article 6 after stretching to twice is defined as CR. The central part CR is a rectangular region having length: 0.2L and width: 0.3W with a center P' of the adhesive article 6 after stretching as a center. The surface of the adhesive article 6 after stretching to twice where the non-adhesive layer has been provided is photographed, its image is binarized using "Image J" that is an image processing program, the number of fragments per unit area (number/cm$^2$) of the non-adhesive layer within the central part CR is calculated by image analysis, and the calculated value is defined as the number of fragments of the non-adhesive layer after stretching to twice. When the binarization greatly differs from visual sense, the non-adhesive layer can be colored with an oil-base color marker or the like before stretching and then stretched.

In the adhesive article having a surface shape other than a rectangular shape, the number of fragments can also be measured according to the above calculation method.

In order to achieve that the number of fragments is 10/cm$^2$ or more, for example, a method of constituting the non-adhesive layer by an aggregate of a plurality of emulsion particles, a method of forming streaks (cuts) in the non-adhesive layer, or the like can be used.

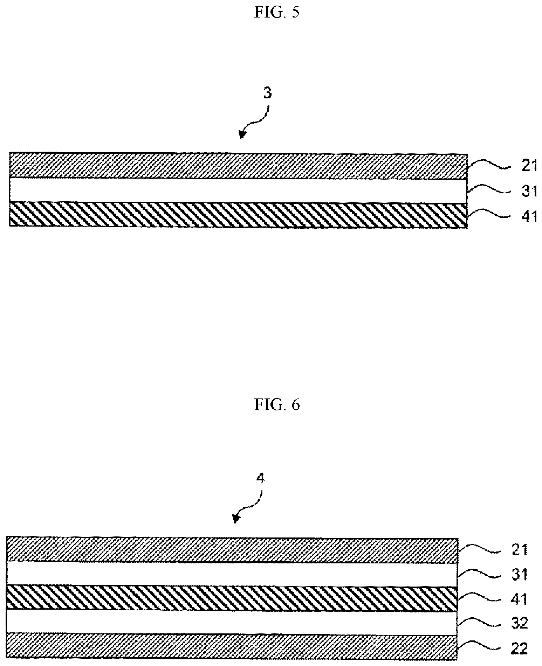

The adhesive article of this embodiment may further include a substrate. Fig. 5 shows a schematic cross-sectional view of one configuration example of the adhesive article according to this embodiment. Adhesive article 3 shown in Fig. 5 includes a substrate 41 having provided on one surface thereof an adhesive layer 31 and a non-adhesive layer 21 in this order. Fig. 6 shows a schematic cross-sectional view of another configuration example of the adhesive article according to this embodiment. Adhesive article 4 shown in Fig. 6 includes a substrate 41, an adhesive layer 31 and a non-adhesive layer 21 that are provided on one surface of the substrate 41 in this order, and an adhesive layer 32 and a non-adhesive layer 22 that are provided on the other surface of the substrate 41 in this order.

In the adhesive article shown in Fig. 5, the adhesive layer and the non-adhesive layer are provided on the whole of one surface of the substrate, and in the adhesive article shown in Fig. 6, the adhesive layer and the non-adhesive layer are provided on the whole of both surfaces of the substrate. However, the present invention is not limited to those embodiments, and the adhesive layer and non-adhesive layer may be only partially provided on one surface or both surfaces of the substrate. The adhesive layer is typically continuously formed, but the present invention is not limited to such embodiment. For example, the adhesive layer may be formed into a regular or random pattern such as a dot shape or a stripe shape. In any case, the surface of the adhesive layer is covered with the non-adhesive layer.

The substrate used in the adhesive article is not particularly limited so long as it does not disturb stretching of the adhesive article. A substrate composed of a material that is stretchable by itself is preferred, and for example, a resin film, a paper, a cloth, a rubber sheet, a foamed sheet and their composites (multilayer body) can be used. Examples of the resin film include polyolefin films such as polyethylene (PE), polypropylene (PP), an ethylenepropylene copolymer or an ethylene-vinyl acetate copolymer (EVA); polyester films such as polyethylene terephthalate (PET); urethane films such as urethane or acryl urethane; vinyl chloride resins; vinyl acetate resins; polyimide resin films; polyamide resin films; fluorine resin films; and cellophane. Examples of the paper include Japanese paper, kraft paper, glassine paper, wood free paper, synthetic paper and top coated layer. Examples of the cloth include woven fabric or nonwoven fabric composed of each of various fibrous materials or a mixture of various fibrous materials. Examples of the fibrous material include cotton, staple fiber, Manila hemp, pulp, rayon, acetate fiber, polyester fiber, polyvinyl alcohol fiber, polyamide fiber and polyolefin fiber. Examples of the rubber sheet include natural rubber sheet and a butyl rubber sheet. Examples of the foamed sheet include a foamed polyurethane sheet and a foamed polychloroprene sheet.

The non-woven fabric used herein has a concept indicating non-woven fabric for adhesive sheet mainly used in the fields of adhesive tapes and other adhesive tapes, and typically means non-woven fabric prepared using the general paper making machine (sometimes called "paper"). The resin film used herein is typically a nonporous resin sheet, and has a concept distinguished from, for example, non-woven fabric (that is, free of non-woven fabric). The resin film may be any of a non-stretched film, a uniaxially stretched film and a biaxially stretched film. Surface treatment such as application of a primer, a corona discharge treatment or a plasma treatment may be applied to the surface of the substrate.

Above all, a polyolefin film and a urethane film are preferably used from the standpoint of easy stretching.

The thickness of the substrate is not particularly limited and can be appropriately selected depending on the purpose. However, when the thickness is too small, the adhesive article may be broken when stretching. Therefore, the thickness is, for example, preferably 5 μm or more and more preferably 10 μm or more. On the other hand, when the thickness is too large, large stress may be required when stretching. Therefore, the thickness is, for example, preferably 100 μm or less and more preferably 50 μm or less.

As necessary, the substrate may contain various additives such as a filler (inorganic filler, organic filler or the like), an age resister, an antioxidant, an ultraviolet absorber, an antistatic agent, a lubricant, a plasticizer and a coloring agent (pigment, dye or the like). The conventional surface treatment such as corona discharge treatment, plasma treatment or application of a primer may be applied to the surface of the substrate.

In the case of the adhesive article having a substrate, the thickness of the adhesive layer is not particularly limited. However, the thickness is, for example, preferably 1 μm or more and more preferably 3 μm or more, from the standpoint of adhesiveness. On the other hand, the thickness is, for example, 200 μm or less and more preferably 150 μm or less, from the standpoint of drying property.

The thickness of the non-adhesive layer is not particularly limited, but is, for example, preferably 0.1 μm or more and more preferably 1 μm or more, from the standpoints of securing of substantial non-adhesiveness before stretching and protection of the adhesive layer. On the other hand, the thickness is, for example, preferably 60 μm or less and more preferably 20 μm or less, from the standpoint of expression of adhesive force.

In the present description, the term that the adhesive article in the initial state (before stretching) "does not substantially have adhesiveness (is substantially non-adhesive)" indicates that a tack value on the surface of the adhesive article measured by the following probe tack test 1 is 5 gf or less. Furthermore, the term that the adhesive article in the initial state (before stretching) "has adhesiveness" indicates that a tack value of the surface of the adhesive article measured by the following probe tack test 1 exceeds 5 gf. More specifically, the tack value is measured according to a probe tack measurement method described in the column of examples described hereinafter.

(Probe tack test 1)

After a stainless steel probe (SUS304) having a diameter of 5 mm has been brought into contact with the surface of the adhesive article with a contact load of 500 gf under an environment of measurement temperature of 23°C, a load applied to a probe when separating 1 mm in a rate of 30 mm/min is measured with time, and a maximum load required when peeling is obtained.

In the present description, the term that the adhesive article after stretching "does not substantially have adhesiveness (is substantially non-adhesive)" indicates that a tack value on the surface of the adhesive article measured by the following probe tack test 2 is 5 gf or less. Furthermore, the term that the adhesive article after stretching "has adhesiveness" indicates that a tack value on the surface of the adhesive article measured by the following probe tack test 2 exceeds 5 gf. More specifically, the tack value is measured according to a probe tack measurement method described in the column of examples described hereinafter.

(Probe tack test 2)

After the adhesive article has been stretched in a lengthwise direction and then a stainless steel probe (SUS304) having a diameter of 5 mm has been brought into contact with the surface of the adhesive article with a contact load of 500 gf under an environment of measurement temperature of 23°C, a load applied to a probe when separating 1 mm in a rate of 30 mm/min is measured with time, and a maximum load required when peeling is obtained.

The term that the adhesive article "expresses adhesiveness by stretching" indicates that the adhesive article is substantially non-adhesive in the initial state before stretching and has adhesiveness after stretching.

In order that the expression of adhesiveness by stretching is better exhibited, the tack value after stretching to twice in a lengthwise direction of the adhesive article is preferably 10 gf or more larger than the tack value before stretching, more preferably 12 gf or more larger than the tack value before stretching, and still more preferably 15 gf or more larger than the tack value before stretching.

From the same standpoint, the tack value after stretching to twice in a lengthwise direction of the adhesive article is preferably 10 gf or more, more preferably 12 gf or more and still more preferably 15 gf or more. The upper limit of the tack value after stretching to twice in a lengthwise direction of the adhesive article is not particularly limited, but is, for example, 1000 gf or less from the standpoint of the balance with shear adhesive force.

From the same standpoint, the tack value after stretching to 4 times in a lengthwise direction of the adhesive article is preferably 20 gf or more larger than the tack value before stretching, more preferably 40 gf or more larger than the tack value before stretching, and still more preferably 60 gf or more larger than the tack value before stretching.

From the same standpoint, the tack value after stretching to 4 times in a lengthwise direction of the adhesive article is preferably 20 gf or more, more preferably 40 gf or more and still more preferably 60 gf or more. The upper limit of the tack value after stretching to 4 times in a lengthwise direction of the adhesive article is not particularly limited, but is, for example, 1000 gf or less from the standpoint of the balance with shear adhesive force.

A method of forming the adhesive article of this embodiment is not particularly limited. For example, in forming the adhesive layer, a method of directly applying an adhesive to a releasable or non-releasable substrate, followed by drying or curing (direct method); a method of applying an adhesive to a surface having releasability, followed by drying or curing, thereby forming an adhesive layer on the surface, and then bonding the adhesive layer to a non-releasable substrate in a transfer (transfer method); and the like can be used. The adhesive can be applied using the conventional coaters such as gravure roll coater, reverse roll coater, kiss roll coater, dip roll coater, bar coater, knife coater or spray coater. The drying temperature can be appropriately adjusted, but is preferably 40 to 200°C, more preferably 50 to 180°C and particularly preferably 70 to 120°C. The drying time can be appropriately adjusted. The drying time is preferably 5 seconds to 20 minutes, more preferably 5 seconds to 10 minutes and particularly preferably 10 seconds to 5 minutes.

In forming the non-adhesive layer on the adhesive layer, for example, when a resin is used, the above-described each method of forming the adhesive layer may be appropriately applied using the non-adhesive layer forming polymer-containing composition. The drying conditions may also be appropriately adjusted and may also follow the drying conditions of the adhesive layer described above. Even in the case of using a polymer material other than a resin, the same method can be appropriately applied using its solution.

In the case of forming an emulsion type non-adhesive layer as the non-adhesive layer, the drying conditions of a water dispersion type non-adhesive layer forming polymer-containing composition are preferably adjusted such that fusion (film formation) of emulsion particles is suppressed. Although depending on a polymer constituting emulsion particles, such drying conditions are, for example, such that when a glass transition temperature of the polymer is Tg, the drying temperature is preferably Tg to Tg+50°C and more preferably Tg+5 to Tg+30°C, and the drying time is preferably 5 seconds to 20 minutes and more preferably 5 seconds to 10 minutes. It is considered that when the adhesive article has been stretched, the non-adhesive layer in which fusion of emulsion particles has been suppressed is broken in various directions from the interfaces of agglomerated emulsion particles and easily becomes fine scaly fragments.

In the case of using a metal material as the non-adhesive layer, deposition, sputtering or the like can be used, and in the case of using an inorganic material, a preparation method using sol gel reaction can be used.

Examples

The present invention is specifically described below by reference to examples, but the invention is not construed as being limited to those examples.

(Example 1)

(Preparation of water dispersion type acrylic adhesive composition for adhesive layer formation)

40 parts by weight of ion-exchanged water were placed in a reaction vessel equipped with a cooling pipe, a nitrogen introduction pipe, a thermometer and a stirrer, and the water was stirred at 60°C for 1 hour or more while introducing nitrogen gas, thereby conducting nitrogen substitution. 0.1 parts by weight of 2,2'-azobis[N-(2-carboxyethyl)-2-methylpropione amidine] n hydrate (polymerization initiator) were added to the reaction vessel. Monomer emulsion A was gradually added dropwise to the reaction vessel over 4 hours while maintaining the system at 60°C, thereby advancing the emulsion polymerization reaction. The monomer emulsion A used was an emulsion obtained by adding 98 parts by weight of 2-ethylhexyl acrylate, 1.25 parts by weight of acrylic acid, 0.75 parts by weight of methacrylic acid, 0.05 parts by weight of lauryl mercaptan (chain transfer agent), 0.02 parts by weight of γ-methacryloxypropyl trimethoxysilane (manufactured by Shin-Etsu Chemical Co., Ltd., trade name "KBM-503") and 2 parts by weight of sodium polyoxyethylene lauryl sulfate (emulsifier) to 30 parts by weight of ion-exchanged water, followed by emulsifying. After completion of dropwise addition of the monomer emulsion A, the resulting mixture was maintained at 60°C for 3 hours, and the system was cooled to room temperature. The pH of the mixture was then adjusted to 7 by adding 10 wt% ammonia water. Thus, an acrylic polymer emulsion (water dispersion type acrylic polymer) A was obtained.

20 parts by weight on solids basis of a tackifying resin emulsion (manufactured by Arakawa Chemical Industries, Ltd., trade name "E-865NT") per 100 parts by weight of the acrylic polymer contained in the acrylic polymer emulsion A were added. Furthermore, the pH was adjusted to 7.2 and viscosity was adjusted to 10 Pa·s, using 10 wt% ammonia water as a pH regulator and polyacrylic acid (manufactured by Toagosei Co., Ltd., trade name "ARON B-500"). Thus, a water dispersion type acrylic adhesive composition A for adhesive layer was obtained.

(Preparation of acrylic polymer emulsion for non-adhesive layer formation)

40 parts by weight of ion-exchanged water were placed in a reaction vessel equipped with a cooling pipe, a nitrogen introduction pipe, a thermometer and a stirrer, and the water was stirred at 60°C for 1 hour or more while introducing nitrogen gas, thereby conducting nitrogen substitution. 0.1 parts by weight of 2,2'-azobis[N-(2-carboxyethyl)-2-methylpropione amidine] n hydrate (polymerization initiator) were added to the reaction vessel. Monomer emulsion B was gradually added dropwise to the reaction vessel over 4 hours while maintaining the system at 60°C, thereby advancing the emulsion polymerization reaction. The monomer emulsion B used was an emulsion obtained by adding 95 parts by weight of n-butyl methacrylate, 5 parts by weight of acrylic acid and 2 parts by weight of sodium polyoxyethylene lauryl sulfate (emulsifier) to 30 parts by weight of ion-exchanged water, followed by emulsifying. After completion of dropwise addition of the monomer emulsion B, the resulting mixture was maintained at 60°C for 3 hours, and then 0.2 parts by weight of hydrogen peroxide solution and 0.6 parts by weight of ascorbic acid were added. After cooling the system to room temperature, the pH of the mixture was adjusted to 7 by adding 10 wt% ammonia water. Thus, an acrylic polymer emulsion (water dispersion type acrylic polymer) B was obtained.

(Preparation of adhesive article)

The water dispersion type acrylic adhesive composition A was applied to a release liner having a release-treated layer by a silicone release agent, and dried at 130°C for 2 minutes. Thus, an adhesive layer having a thickness of 40 $\mu$m was formed. The acrylic polymer emulsion B was applied to the adhesive layer by a bar coater such that the thickness after drying is about 5 $\mu$m, and dried at 70°C for 5 minutes. Thus, a two-layer structure of an adhesive layer and a non-adhesive layer was obtained. Thereafter, the release liner on the adhesive layer side was released and the two-layer structure was then transferred to a stretch film S (manufactured by Sekisui Material Solutions, thickness: 25 $\mu$m). The resulting laminate was cut into a size of 3 cm width and 5 cm length. Thus, a sample of the adhesive article of Example 1 was obtained.

(Example 2)

A sample of the adhesive article of Example 2 was prepared in the same manner as in Example 1 except that the drying conditions after applying the acrylic polymer emulsion B were changed to 130°C and 2 minutes.

(Comparative Example 1)

(Adhesive composition for adhesive layer formation)

The water dispersion type acrylic adhesive composition A prepared in Example 1 was used as an adhesive composition for adhesive layer.

(Preparation of acrylic polymer solution for non-adhesive layer formation)

150 part by weight of toluene, 90 parts by weight of n-butyl methacrylate and 10 parts by weight of acrylic acid were placed in a reaction vessel equipped with a cooling pipe, a nitrogen introduction pipe, a thermometer and a stirrer, and the resulting mixture was stirred at room temperature for 1 hour or more while introducing nitrogen gas, thereby conducting nitrogen substitution. 0.6 parts by weight of benzoyl peroxide were added to the reaction vessel, the temperature was elevated to 70°C and the reaction was conducted for 8 hours. Thereafter, toluene was added to the reaction liquid to adjust the solid content to 20%. 2 parts by weight of TETRAD-C (manufactured by Mitsubishi Gas Chemical Company, Inc.) as a crosslinking agent were added to the resulting mixture. Thus, an acrylic polymer solution C was prepared.

(Preparation of adhesive article)

A sample of the adhesive article according to Comparative Example 1 was prepared in the same manner as in Example 1 except that the acrylic polymer solution C was used as a forming material of the non-adhesive layer in place of the acrylic polymer emulsion B.

[Measurement of tack value in initial state (before stretching)]

The surface (surface of stretch film side) opposite the non-adhesive layer side of the sample according to each Example and Comparative Examples was stuck on a slide glass manufactured by Matsunami Glass Inc., Ltd. using a double-sided adhesive tape "No. 5000N" (thickness: 0.16 mm) manufactured by Nitto Denko Corporation. Thus, a test piece was prepared.

The test piece prepared was subjected to a probe tack test using a probe tack measuring device (TACKINESS TESTER Model TAC-II manufactured by RHESCA).

Specifically, after stainless steel probe (SUS304) having a diameter of 5 mm was brought into contact with the surface at the sample side (non-adhesive layer side of adhesive article) of the test piece with a contact load of 500 gf under the environment of a measurement temperature of 23°C, a load applied to the probe when separating 1 mm in a rate of 30 mm/min was measured with time, and the maximum load required when peeling was obtained. The maximum load was defined as a tack value (gf) in the initial state (before stretching).

When the tack value measured by the probe tack test is 5 gf or less, it is evaluated that the adhesive article "does not substantially have adhesiveness (is substantially non-adhesive)".

[Measurement of tack value after stretching]

After a sample of each Example was stretched to twice or 4 times in a lengthwise direction, the surface (stretch film side surface) opposite the non-adhesive layer side was stuck on a slide glass manufactured by Matsunami Glass Inc., Ltd. using a double-sided adhesive tape "No. 5000N" (thickness: 0.16 mm) manufactured by Nitto Denko Co., Ltd. Thus, a test piece was prepared.

The test piece prepared was subjected to the same test method under the same test conditions as in the tack value in the initial state (before stretching), and the tack value (gf) after stretching to twice or stretching to 4 times was measured.

[Calculation of the number of fragments of non-adhesive layer]

Adhesive article 5 having length L: 5 cm and width W: 3 cm with a center P as a center was prepared as shown in Fig. 3. Stretching direction (lengthwise direction) is defined as "Horizontal" and a direction vertical to the stretching direction (lengthwise direction) is defined as "Vertical". The adhesive article 5 is stretched to twice in the lengthwise direction to prepare an adhesive article 6 after stretching to twice as shown in Fig. 4. In this case, the central part (region surrounded by dot line in Fig. 4) in the adhesive article 6 after stretching to twice is defined as CR. The central part CR is a rectangular region having length: 1 cm (=0.2L) and width: 0.9 mm (=0.3W) with a center P' of the adhesive article 6 after stretching as a center. The surface of the adhesive article 6 after stretching to twice where the non-adhesive layer has been provided was photographed, its image was binarized using "Image J" that is an image processing program, the number of fragments per unit area ([number]/cm$^2$) of the non-adhesive layer within the central part CR was calculated by image analysis, and the calculated value was defined as the number of fragments of the non-adhesive layer after stretching to twice. In Comparative Example 1, the non-adhesive layer was colored with an oil-base color marker before stretching and then stretched.

(Elastic modulus at 23°C of non-adhesive layer)

Elastic modulus at 23°C of the non-adhesive layer was measured by the following measurement method.

In Example 1, a sheet-like test piece having a size of 3 mm width, 30 mm length and 0.04 mm thickness was prepared under the drying conditions of 70°C and 5 minutes using the acrylic polymer emulsion B for non-adhesive layer formation. In Example 2, a sheet-like test piece having the same size as in Example 1 was prepared under the drying conditions of 130°C and 2 minutes using the acrylic polymer emulsion B for non-adhesive layer formation. In Comparative Example 1, a sheet-like test piece having the same size as in Example 1 was prepared under the drying conditions of 70°C and 5 minutes using the acrylic polymer solution C for non-adhesive layer formation. Storage modulus of each of those test pieces in the conditions of vibration frequency: 1 Hz, temperature range: -40 to 200°C and temperature rising rate: 5°C/min using a dynamic viscoelasticity measuring device (trade name: RSA-III, manufactured by TA Instruments).

Measurement results of a tack value in the initial state (before stretching), a tack value after stretching to twice and a tack value after stretching to 4 times in the evaluation sample of each example are shown in Table 1. The number of fragments of the non-adhesive layer after stretching to twice are shown. Additionally, the measurement results of storage modulus of the non-adhesive layers are shown.

[Table 1]

Table 1

| | Example 1 | Example 2 | Comparative Example 1 |
|---|---|---|---|
| Tack value in initial state (before stretching) (gf) | 1 | 1 | 1 |
| Tack value after stretching to twice (gf) | 20 | 11 | 5 |
| Tack value after stretching to 4 times (gf) | 104 | 39 | 9 |
| The number of fragments per unit area of non-adhesive layer after stretching to twice (number/cm$^2$) | 172 | 34 | 5 |
| Storage modulus of non-adhesive layer (Pa) | $4.0 \times 10^8$ | $8.0 \times 10^8$ | $7.3 \times 10^8$ |

The adhesive articles of Examples 1 and 2 having an emulsion type non-adhesive layer and in which the above-mentioned number of fragments of the non-adhesive layer after stretching to twice is 10/cm$^2$ or more expressed good adhesiveness after stretching as compared with the adhesive article of Comparative Example 1.

Although various embodiments have been described above by reference to the drawings, it is needless to say that the present invention is not limited to those examples. It is apparent to one skilled in the art that various modifications or changes can be made within the scope of the claims, and it is understood that those modifications and changes belong to the technical scope of the present invention. Furthermore, each structural element in the above embodiments may be arbitrarily combined within a range that does not deviate the gist of the invention.

This application is based on Japanese Patent Application No. 2017-192137 filed September 29, 2017, and Japanese Patent Application No. 2018-181176 filed September 27, 2018, the disclosures of which are incorporated herein by reference.

REFERENCE SIGNS LIST

1, 2, 3, 4, 5:    Adhesive article
21, 22:    Non-adhesive layer
31, 32:    Adhesive layer
41:    Substrate
6:    Adhesive article after stretching to twice
P:    Center
P':    Center
CR:    Central part

**Claims**

1.  An adhesive article comprising an adhesive layer and a non-adhesive layer provided on at least one surface of the adhesive layer,
    wherein the adhesive article expresses adhesiveness when the non-adhesive layer is broken by stretching, and
    wherein when the adhesive article has been stretched to twice in a lengthwise direction, the number of fragments per unit area of the non-adhesive layer is 10/cm$^2$ or more at the central part of the surface of the adhesive article after stretching to twice where the non-adhesive layer has been provided.

2.  The adhesive article according to claim 1, further comprising a substrate,
    wherein the adhesive layer and the non-adhesive layer are provided in this order on the substrate.

3.  The adhesive article according to claim 1 or 2, wherein the non-adhesive layer contains a polymer material.

4.  The adhesive article according to claim 3, wherein the non-adhesive layer contains an aggregate of a plurality of emulsion particles.

5.  The adhesive article according to any one of claims 1 to 4, wherein a tack value of the adhesive article after stretching to twice in a lengthwise direction measured by the following probe tack test 2 is 10 gf or more larger than a tack value before stretching measured by the following probe tack test 1.

(Probe tack test 1)

After a stainless steel probe (SUS304) having a diameter of 5 mm has been brought into contact with the surface of the adhesive article with a contact load of 500 gf under an environment of measurement temperature of 23°C, a load applied to the probe when separating 1 mm in a rate of 30 mm/min is measured with time, and a maximum load required when peeling is obtained.

(Probe tack test 2)

After the adhesive article has been stretched in a lengthwise direction and then a stainless steel probe (SUS304) having a diameter of 5 mm has been brought into contact with the surface of the adhesive article with a contact load of 500 gf under an environment of measurement temperature of 23°C, a load applied to the probe when separating 1 mm in a rate of 30 mm/min is measured with time, and a maximum load required when peeling is obtained.

6. An adhesive article comprising an adhesive layer and a non-adhesive layer provided on at least one surface of the adhesive layer,

wherein the adhesive article expresses adhesiveness when the non-adhesive layer is broken by stretching, and

wherein the non-adhesive layer contains an aggregate of a plurality of emulsion particles.

FIG. 1

1

21
31

FIG. 2

2

21
31
22

FIG. 3

STRETCHING DIRECTION
(LENGTHWISE DIRECTION)

FIG. 4

STRETCHING DIRECTION

(LENGTHWISE DIRECTION)

FIG. 5

3

21
31
41

FIG. 6

4

21
31
41
32
22

## INTERNATIONAL SEARCH REPORT

| International application No. |
|---|
| PCT/JP2018/036038 |

**A. CLASSIFICATION OF SUBJECT MATTER**
Int.Cl. C09J7/00(2018.01)i, C09J201/00(2006.01)i

According to International Patent Classification (IPC) or to both national classification and IPC

**B. FIELDS SEARCHED**

Minimum documentation searched (classification system followed by classification symbols)
Int.Cl. C09J7/00, C09J201/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 38-028672 Y1 (AOYAMA, Yoshiro) 25 December 1963, entire text (Family: none) | 1-2, 5<br>3-4, 6 |
| X | JP 2000-290603 A (NITTO DENKO CORP.) 17 October 2000, claims, paragraphs [0011], [0020]-[0022], examples (Family: none) | 1-2, 5 |
| X<br>Y | JP 38-016319 Y1 (NITTO ELECTRIC IND CO., LTD.) 29 August 1963, entire text (Family: none) | 1, 3-6<br>3-4, 6 |
| X<br>Y | JP 40-017976 Y1 (NITTO ELECTRIC IND CO., LTD.) 25 June 1965, entire text (Family: none) | 1-2, 5<br>3-4, 6 |
| Y | JP 05-302069 A (SEKISUI CHEMICAL CO., LTD.) 16 November 1993, claims (Family: none) | 3-4, 6 |
| A | JP 50-037691 B1 (NITTO ELECTRIC IND CO., LTD.) 04 December 1975, page 1, left column (Family: none) | 1-6 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 November 2018 (01.11.2018) | 13 November 2018 (13.11.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4380837 B
- JP 2017192137 A
- JP 2018181176 A